# EUROPEAN PATENT APPLICATION

(11) **EP 3 650 417 A1**
(43) Date of publication of application: **13.05.2020**
(21) Application number: 18827811.3
(22) Date of filing: 06.07.2018
(51) Int. Cl.: C03C 27/12, B32B 3/14, B32B 15/08, B32B 17/10, B32B 27/06, B32B 27/22, H01B 13/00, H05B 3/20, H05B 3/84

(54) **METHOD FOR PRODUCING FILM CONTAINING CONDUCTIVE STRUCTURE WITH BASE MATERIAL FILM**

(30) Priority: 07.07.2017 JP 2017133887
(71) Applicant: Kuraray Co., Ltd., Kurashiki-shi, Okayama 710-0801 (JP)
(72) Inventor: ISOUE, Koichiro, Kurashiki-shi Okayama 713-8550 (JP); YASUDA, Hirotaka, Kurashiki-shi Okayama 713-8550 (JP)
(74) Representative: Müller-Boré & Partner Patentanwälte PartG mbB
(86) International application number: PCT/JP2018/025684
(87) International publication number: WO 2019/009409

(57) **Abstract**

The present invention relates to a production method of a conductive structure-containing film with a substrate film, the production method comprising:
a step (1) of forming a resin layer (X) by coating a thermoplastic resin composition (A) containing at least one thermoplastic resin selected from the group consisting of a polyvinyl acetal resin, an ionomer resin, and an ethylene-vinyl acetate copolymer resin on one side of a substrate film; and
a step (2) of forming a conductive structure on the resin layer (X).

## Description

### TECHNICAL FIELD

The present invention relates to a production method of a conductive structure-containing film with a substrate film. The present invention also relates to a conductive structure-containing film with a substrate film obtainable by the production method, a conductive structure-containing film obtainable from the film and a production method thereof, a laminated glass and a heating member which comprise the conductive structure-containing film, and a production method of the laminated glass.

### BACKGROUND ART

A method of removing icing and fogging on glass in buildings or vehicles, for example, a method of removing icing and fogging on windshields or the like in automobile applications is needed. As a solution to this problem, although a method of applying hot air to glass is known, this method has, for example, a problem that time is required to obtain sufficient front visibility. In particular, in electric vehicles in which combustion heat of gasoline fuel cannot be used for removing icing and fogging, a method of heating air with electricity and applying hot air to the glass is inefficient and has a problem of directly reducing the cruising range.

Thus, a method of removing icing and fogging by electrifying a heating wire provided in glass has been proposed. Patent Document 1 describes a production method of a laminated glass having a conductive structure, the production method comprising the step of bonding two transparent plates, at least one sheet A, and at least one sheet B together, wherein the sheet A contains polyvinyl acetal PA and a plasticizer WA and has a conductive structure, and the sheet B contains polyvinyl acetal PB and a plasticizer WB. Meanwhile, Patent Document 2 describes a production method of a laminated glass for electromagnetic wave shielding, wherein a metal foil is bonded to a carrier resin through an adhesive film and the metal foil is etched to form a metal mesh, a first glass plate is bonded over the metal mesh through the adhesive film, then the carrier resin is peeled off, and a second glass plate is bonded to the side from which the carrier resin is peeled through the adhesive film.

### PRIOR ART DOCUMENTS

### PATENT DOCUMENTS

Patent Document 1: JP 2016-539905 A
Patent Document 2: JP 2000-119047 A

### SUMMARY OF THE INVENTION

### PROBLEMS TO BE SOLVED BY THE INVENTION

In the method described in Patent Document 1, a high-precision film forming apparatus is required. This is because the unevenness in thickness of the sheet A needs to be extremely small, and the side of the sheet A on which a conductive structure is formed needs to be finished extremely smoothly in order to prevent likelihood of breaks in the resulting conductive structure due to uneven adhesion of the metal foil. When multiple sheets A having a conductive structure are stacked or rolled up in a roll shape, the conductive structure easily adheres to the side of the sheet A without the conductive structure at the overlapped part, making the transportation, storage and the like prior to the production of a laminated glass difficult. In the production method described in Patent Document 2, a film is used as the adhesive film, and thus when the metal foil is bonded to the carrier resin through the adhesive film, defects such as bubbles are likely to occur between the metal foil and the adhesive film and between the adhesive film and the carrier resin. There is also a problem of increased steps because the adhesive film is produced in advance, then interposed between the metal foil and the carrier resin, and heated for bonding.

The present invention solves the above-mentioned problems, and an object of the present invention is to provide a production method of a conductive structure-containing film with a substrate film having few defects such as deformations and breaks of the conductive structure and bubbles with high production efficiency and production yield, without the need for high-precision film forming equipment. Another object of the present invention is to provide a conductive structure-containing film with a substrate film obtainable by the production method, a conductive structure-containing film obtainable from the film and a production method thereof, a laminated glass and a heating member which comprise the conductive structure-containing film, and a production method of the laminated glass.

### SOLUTIONS TO THE PROBLEMS

The present inventors have intensively studied to solve the problems, thereby completing the present invention. The present invention includes the following preferred aspects.
[1] A production method of a conductive structure-containing film with a substrate film, the production method comprising: a step (1) of forming a resin layer (X) by coating a thermoplastic resin composition (A) containing at least one thermoplastic resin selected from the group consisting of a polyvinyl acetal resin, an ionomer resin, and an ethylene-vinyl acetate copolymer resin on one side of the substrate film; and a step (2) of forming a conductive structure on the resin layer (X).
[2] A production method of a conductive structure-containing film with a substrate film, the production method comprising: a step (3) of forming a resin layer (X) by coating a thermoplastic resin composition (A) containing at least one thermoplastic resin selected from the group consisting of a polyvinyl acetal resin, an ionomer resin, and an ethylene-vinyl acetate copolymer resin on one side of a metal foil; a step (4) of laminating a substrate film on the resin layer (X); and a step (5) of forming a conductive structure by processing the metal foil.
[3] The production method of a conductive structure-containing film with a substrate film according to [1] or [2] above, wherein, in the step (1) or the step (3), a method of coating the thermoplastic resin composition (A) is a method of coating of a melting thermoplastic resin composition (A).
[4] The production method of a conductive structure-containing film with a substrate film according to [1] or [2] above, wherein, in the step (1) or the step (3), a method of coating the thermoplastic resin composition (A) is a method of coating a solution or a dispersion of the thermoplastic resin composition (A).
[5] The production method of a conductive structure-containing film with a substrate film according to any of [1] to [4] above, wherein the thermoplastic resin composition (A) contains 50% by mass or more of a polyvinyl acetal resin based on a total mass of the thermoplastic resin composition (A).
[6] The production method of a conductive structure-containing film with a substrate film according to [5] above, wherein a viscosity of a toluene/ethanol =1/1 (mass ratio) solution having a concentration of the polyvinyl acetal resin of 10% by mass measured at 20°C and 30 rpm by use of a Brookfield type (B type) viscometer is more than 200 mPa•s.
[7] The production method of a conductive structure-containing film with a substrate film according to [5] or [6] above, wherein the thermoplastic resin composition (A) contains 0 to 20% by mass of a plasticizer based on the total mass of the thermoplastic resin composition (A).
[8] The production method of a conductive structure-containing film with a substrate film according to any of [1] to [7] above, wherein the thermoplastic resin composition (A) contains 80% by mass or more of the polyvinyl acetal resin based on the total mass of the thermoplastic resin composition (A).
[9] The production method of a conductive structure-containing film with a substrate film according to any of [1] to [8] above, wherein the conductive structure includes at least two bus bar structures.
[10] The production method of a conductive structure-containing film with a substrate film according to [9] above, wherein the conductive structure includes a metal thin wire structure between the at least two bus bar structures.
[11] The production method of a conductive structure-containing film with a substrate film according to any of [1] to [10] above, wherein, in the step (2) or the step (5), the conductive structure is formed by etching the metal foil.
[12] A conductive structure-containing film with a substrate film obtainable by the production method according to any of [1] to [11] above.
[13] A production method of a conductive structure-containing film, the production method comprising: a step (6) of removing a substrate film from a conductive structure-containing film with a substrate film obtainable by the production method according to any of [1] to [11] above.
[14] A conductive structure-containing film obtainable by the production method according to [13] above.
[15] A production method of a laminated glass, the production method comprising: a step (7) of interposing and laminating a conductive structure-containing film obtainable by the production method according to [13] above between at least two glass plates.
[16] A production method of a laminated glass, the production method comprising: a step (8) of obtaining a laminate by placing and laminating a glass plate on a side without a substrate film of a conductive structure-containing film with a substrate film obtainable by the production method according to any of [1] to [11] above; and a step (9) of removing the substrate film from the laminate and further placing and laminating a glass plate on a side without a glass plate.
[17] The production method of a laminated glass according to [15] above, wherein, in the step (7), at least one resin layer (Y) is interposed between the conductive structure-containing film and the glass plate.
[18] The production method of a laminated glass according to [16] above, wherein at least one resin layer (Y) is interposed between the conductive structure-containing film with a substrate film and the glass plate in the step (8), and/or between a laminate after removal of the substrate film and the glass plate in the step (9).
[19] The production method of a laminated glass according to [17] or [18] above, wherein the resin layer (Y) contains a thermoplastic resin identical to a thermoplastic resin contained in the thermoplastic resin composition (A).
[20] A laminated glass obtainable by the production method according to any of [15] to [19] above.
[21] A heating member comprising the conductive structure-containing film according to [14] above.

### EFFECTS OF THE INVENTION

According to the present invention, a conductive structure-containing film with a substrate film having few defects such as deformations and breaks of the conductive structure and bubbles can be produced with high production efficiency and production yield, without the need for high-precision film forming equipment. A conductive structure-containing film obtainable from the film can be obtained, and further a laminated glass and a heating member can be produced using the conductive structure-containing film.

### EMBODIMENTS OF THE INVENTION

A production method of the present invention comprises a step (1) of forming a resin layer (X) by coating a thermoplastic resin composition (A) (which may be abbreviated as "resin composition (A)" hereinafter) containing at least one thermoplastic resin selected from a polyvinyl acetal resin, an ionomer resin, and an ethylene-vinyl acetate copolymer resin on one side of a substrate film; and a step (2) of forming a conductive structure on the resin layer (X). Another aspect of the production method of the present invention comprises a step (3) of forming a resin layer (X) by coating a resin composition (A) containing at least one thermoplastic resin selected from the group consisting of a polyvinyl acetal resin, an ionomer resin, and an ethylene-vinyl acetate copolymer resin on one side of a metal foil; a step (4) of laminating a substrate film on the resin layer (X); and a step (5) of forming a conductive structure by processing the metal foil.

By these production methods of the present invention, a conductive structure-containing film with a substrate film having a laminated constitution of substrate film/resin layer (X)/conductive structure can be produced. In the conductive structure-containing film with a substrate film, the substrate film and the resin layer (X), and the resin layer (X) and the conductive structure are joined or integrated each other.

### <Step (1), Step (3)>

### <Resin composition (A)>

The resin composition (A) used in the step (1) and the step (3) contains at least one thermoplastic resin selected from the group consisting of a polyvinyl acetal resin, an ionomer resin, and an ethylene-vinyl acetate copolymer resin. Among these, the resin composition (A) preferably contains a polyvinyl acetal resin and/or an ionomer resin, and preferably contains a polyvinyl acetal resin.

### <Polyvinyl acetal resin>

When the resin composition (A) contains a polyvinyl acetal resin, the content of the polyvinyl acetal resin in the resin composition (A) is preferably 50% by mass or more, more preferably 70% by mass or more, further preferably 80% by mass or more, particularly preferably 85% by mass or more, extremely preferably 90% by mass or more, and most preferably 95% by mass or more, and the content may be 100% by mass, based on the total mass of the resin composition (A).

The resin composition (A) may contain one polyvinyl acetal resin, or may contain two or more polyvinyl acetal resins different in any one or more of the viscosity average polymerization degree, the degree of acetalization, the amount of acetyl groups, the amount of hydroxyl groups, the ethylene content, the molecular weight of the aldehyde used for acetalization, and the chain length.

The polyvinyl acetal resin can be produced by acetalization of polyvinyl alcohol-based resins such as polyvinyl alcohol and ethylene-vinyl alcohol copolymer. Although the polyvinyl acetal resin can be produced, for example, by the following method, the production method is not limited to this. First, an aqueous polyvinyl alcohol or ethylene-vinyl alcohol copolymer solution having a concentration of 3 to 30% by mass is kept in a temperature range of 80 to 100°C, and then gradually cooled over 10 to 60 minutes. When the temperature decreases to -10 to 30°C, an aldehyde and an acid catalyst are added, and acetalization reaction is performed for 30 to 300 minutes with the temperature kept constant. Next, the reaction liquid is heated to a temperature of 20 to 80°C over 30 to 200 minutes and kept for 30 to 300 minutes. Then, after the reaction liquid is filtered as needed, the reaction liquid is neutralized by addition of a neutralizer such as an alkali, filtered, washed with water, and dried to produce a polyvinyl acetal resin.

The acid catalyst used for the acetalization reaction is not particularly limited, and an organic acid and an inorganic acid can be used. Examples of the acid catalyst include acetic acid, p-toluenesulfonic acid, nitric acid, sulfuric acid, and hydrochloric acid. Among these, hydrochloric acid, sulfuric acid, and nitric acid are preferred from the viewpoints of acid strength and ease of removal during washing.

The aldehyde used in the production of the polyvinyl acetal resin is preferably a linear, branched, or cyclic aldehyde having 2 to 10 carbon atoms, more preferably a linear or branched aldehyde having 2 to 10 carbon atoms, further preferably a linear aliphatic aldehyde having 2 to 10 carbon atoms, particularly preferably n-butyraldehyde. When the above-mentioned aldehyde is used, a polyvinyl acetal resin having a suitable breaking energy is easily obtained. The amount of the n-butyraldehyde used is preferably 50% by mass or more, more preferably 80% by mass or more, further preferably 95% by mass or more, and particularly preferably 99% by mass or more, and the amount may be 100% by mass, with respect to the total mass of the aldehyde used in the acetalization reaction. A single aldehyde or a mixture of multiple aldehydes may be used.

The viscosity average polymerization degree of the polyvinyl alcohol-based resin, which is a raw material of the polyvinyl acetal resin, is preferably 100 or more, more preferably 300 or more, more preferably 400 or more, further preferably 600 or more, particularly preferably 700 or more, and most preferably 750 or more. When the viscosity average polymerization degree of the polyvinyl alcohol-based resin is the above-mentioned lower limit or more, deformations and breaks of the conductive structure are easily suppressed during the production of the laminated glass, and the phenomenon of the glass displacement due to heat in the obtained laminated glass is easily prevented. The viscosity average polymerization degree of the polyvinyl alcohol-based resin is preferably 5000 or less, more preferably 3000 or less, further preferably 2500 or less, particularly preferably 2300 or less, and most preferably 2000 or less. When the viscosity average polymerization degree of the polyvinyl alcohol-based resin is the above-mentioned upper limit or less, good film forming properties are easily obtained. The viscosity average polymerization degree of the polyvinyl alcohol-based resin can be measured based on, for example, JIS K 6726 "Testing method for polyvinyl alcohol".

The preferred viscosity average polymerization degree of the polyvinyl acetal resin is identical to the above viscosity average polymerization degree of the polyvinyl alcohol-based resin, which is the raw material. When the resin composition (A) contains two or more different polyvinyl acetal resins, at least one of the polyvinyl acetal resins preferably has a viscosity average polymerization degree of the above-mentioned lower limit or more and the above-mentioned upper limit or less.

The amount of the acetyl group based on the ethylene unit of the polyvinyl acetal main chain of the polyvinyl acetal resin, that is, the content of the vinyl acetate unit based on the one repeat unit that is a unit consisting of two carbons of the main chain in the polyvinyl alcohol-based resin of a raw material of the polyvinyl acetal resin (for example, a vinyl alcohol unit, a vinyl acetate unit, an ethylene unit and the like), is preferably 0.1 to 20 mol%, more preferably 0.5 to 3 mol% or 5 to 8 mol%. The amount of the acetyl group can be adjusted within the above range by appropriately adjusting the degree of saponification of the polyvinyl alcohol-based resin of the raw material. The amount of the acetyl group may affect the polarity of the polyvinyl acetal resin, which can change the compatibility with the plasticizer and mechanical strength of the resin layer (X). When the resin composition (A) contains two or more different polyvinyl acetal resins, at least one polyvinyl acetal resin preferably has the amount of the acetyl group within the above-mentioned range.

Although the degree of acetalization of the polyvinyl acetal resin is not particularly limited, it is preferably 40 to 86 mol%, more preferably 45 to 84 mol%, more preferably 50 to 82 mol%, further preferably 60 to 82 mol%, and particularly preferably 68 to 82 mol%. In the present invention, the "degree of acetalization" means the amount of the unit that forms acetal based on one repeat unit that is a unit consisting of two carbons of the main chain in the polyvinyl alcohol-based resin of a raw material of the polyvinyl acetal resin (for example, a vinyl alcohol unit, a vinyl acetate unit, an ethylene unit and the like). The degree of acetalization of the polyvinyl acetal resin can be adjusted within the above-mentioned range by appropriately adjusting the amount of aldehyde used in acetalization of the polyvinyl alcohol-based resin. When the degree of acetalization is within the above-mentioned range, the compatibility between the polyvinyl acetal resin and the plasticizer is less likely to be lowered, and the mechanical strength of the conductive structure-containing film with a substrate film obtained by the production method of the present invention tends to be sufficient. When the resin composition (A) contains two or more different polyvinyl acetal resins, at least one polyvinyl acetal resin preferably has the degree of acetalization within the above-mentioned range.

The amount of the hydroxy group based on the ethylene unit of the polyvinyl acetal main chain of the polyvinyl acetal resin, that is, the content of the vinyl alcohol unit based on one repeat unit that is a unit consisting of two carbons of the main chain in the polyvinyl alcohol-based resin of a raw material of the polyvinyl acetal resin (for example, a vinyl alcohol unit, a vinyl acetate unit, an ethylene unit and the like) is preferably 6 to 26% by mass, more preferably 12 to 24% by mass, more preferably 15 to 22% by mass, particularly preferably 18 to 21% by mass, and for the purpose of imparting sound insulation performance, it is preferably 6 to 20% by mass, more preferably 8 to 18% by mass, further preferably 10 to 15% by mass, and particularly preferably 11 to 13% by mass. The amount of the hydroxy group can be adjusted within the above-mentioned range by adjusting the amount of aldehyde used in acetalization of the polyvinyl alcohol-based resin. When the resin composition (A) contains two or more different polyvinyl acetal resins, at least one polyvinyl acetal resin preferably has the amount of the hydroxy group within the above-mentioned range.

The polyvinyl acetal resin is usually constituted of an acetal group unit, a hydroxy group unit, and an acetyl group unit, and the amount of each unit can be measured by, for example, JIS K 6728 "Testing method for polyvinyl butyral" or nuclear magnetic resonance method (NMR).

The viscosity of a toluene/ethanol = 1/1 (mass ratio) solution having a concentration of the polyvinyl acetal resin of 10% by mass measured at 20°C and 30 rpm by use of a Brookfield type (B type) viscometer is preferably 200 mPa•s or more, more preferably more than 200 mPa•s, further preferably 240 mPa•s or more, and particularly preferably 265 mPa•s or more. The viscosity of the polyvinyl acetal resin can be adjusted to the above-mentioned lower limit value or more by using or co-using the polyvinyl acetal resin produced using a polyvinyl alcohol-based resin with a high viscosity average polymerization degree as a raw material or a part of the raw material. When the resin composition (A) is constituted of a mixture of polyvinyl acetal resins, the viscosity of the mixture is preferably the above-mentioned lower limit or more. When the viscosity of the polyvinyl acetal resin is the above-mentioned lower limit or more, deformations and breaks of the conductive structure are easily suppressed during the production of the laminated glass, and the phenomenon of the glass displacement due to heat in the obtained laminated glass is easily prevented. From the viewpoint of ease of obtaining good film forming properties, the viscosity is preferably 1000 mPa•s or less, more preferably 800 mPa•s or less, further preferably 500 mPa•s or less, particularly preferably 450 mPa•s or less, and most preferably 400 mPa•s or less.

### <Plasticizer>

The resin composition (A) preferably contains 0 to 20% by mass of a plasticizer based on the total mass of the resin composition (A). The content of the plasticizer in the resin composition (A) is more preferably 0 to 19% by mass, further preferably 0 to 15% by mass, particularly preferably 0 to 10% by mass, and most preferably 0 to 5% by mass. When the content of the plasticizer is within the above-mentioned range, the conductive structure-containing film obtained after removal of the substrate film from the conductive structure-containing film with a substrate film of the present invention tends to have excellent handleability, deformations and breaks of the conductive structure are easily suppressed during the production of the laminated glass comprising the conductive structure-containing film, and as a result, good electrical conductivity is easily obtained.

Examples of the plasticizer include the following compounds. One plasticizer may be used alone, or multiple plasticizers may be used.
- Esters of polyvalent aliphatic or aromatic acids. Examples thereof include dialkyl adipates (for example, dihexyl adipate, di-2-ethylbutyl adipate, dioctyl adipate, di-2-ethylhexyl adipate, hexyl cyclohexyl adipate, heptyl adipate, nonyl adipate, diisononyl adipate, heptyl nonyl adipate); esters of adipic acid with alcohols or alcohols containing ether compounds (for example, di(butoxyethyl) adipate, di(butoxyethoxyethyl) adipate); dialkyl sebacates (for example, dibutyl sebacate); esters of sebacic acid with alicyclic alcohols or alcohols containing ether compounds; esters of phthalic acid (for example, butylbenzyl phthalate, bis-2-butoxyethyl phthalate); and esters of alicyclic polycarboxylic acids with aliphatic alcohols (for example, 1,2-cyclohexanedicarboxylic acid diisononyl ester).
- Esters or ethers of aliphatic or aromatic polyvalent alcohols or oligoether glycols having one or more aliphatic or aromatic substituents. Examples thereof include esters of glycerin, diglycol, triglycol, tetraglycol and the like with linear or branched, aliphatic or alicyclic carboxylic acids. More specifically, examples thereof include diethylene glycol-bis-(2-ethylhexanoate), triethylene glycol-bis-(2-ethylhexanoate), triethylene glycol-bis-(2-ethylbutanoate), tetraethylene glycol-bis-n-heptanoate, triethylene glycol-bis-n-heptanoate, triethylene glycol-bis-n-hexanoate, tetraethylene glycol dimethyl ether, and dipropylene glycol benzoate.
- Phosphoric esters of aliphatic or aromatic ester alcohols. Examples thereof include tris(2-ethylhexyl) phosphate, triethyl phosphate, diphenyl-2-ethylhexyl phosphate, and tricresyl phosphate.
- Esters of citric acid, succinic acid and/or fumaric acid.
- Polyesters or oligoesters of polyhydric alcohols with polycarboxylic acids. The terminal may be a hydroxy group or a carboxyl group, or may be esterified or etherified.
- Polyesters or oligoesters of lactones or hydroxycarboxylic acids. The terminal may be a hydroxy group or a carboxyl group, or may be esterified or etherified.

### <Ionomer resin>

When the resin composition (A) contains an ionomer resin, the content of the ionomer resin in the resin composition (A) is preferably 50% by mass or more, more preferably 70% by mass or more, further preferably 80% by mass or more, particularly preferably 85% by mass or more, extremely preferably 90% by mass or more, and most preferably 95% by mass or more, and the content may be 100% by mass, based on the total mass of the resin composition (A). The resin composition (A) may contain one ionomer resin, or contain two or more ionomer resins different in any one or more of the type of α, β-unsaturated carboxylic acids, the content of the α, β-unsaturated carboxylic acid structural unit, the type of the metal ion for neutralization, the type of α-olefin, the content of the α-olefin structural unit, the type and content of other copolymerizable monomers represented by esters of α, β-unsaturated carboxylic acids, and the like.

Examples of the ionomer resin include resins having a structural unit derived from ethylene and a structural unit derived from α, β-unsaturated carboxylic acid in which at least a part of the α, β-unsaturated carboxylic acid is neutralized by a metal ion. Examples of the metal ion include a sodium ion and a magnesium ion. In the ethylene-α, β-unsaturated carboxylic acid copolymer being a base polymer, that is, before being neutralized by a metal ion, the content of the α, β-unsaturated carboxylic acid structural unit is preferably 2% by mass or more, more preferably 5% by mass or more, preferably 30% by mass or less, and more preferably 20% by mass or less. When the resin composition (A) contains two or more different ionomer resins, at least one of the ionomer resins preferably has the content of the α, β-unsaturated carboxylic acid structural unit within the range between the above-mentioned lower limit and the above-mentioned upper limit. Examples of the α, β-unsaturated carboxylic acid that constitutes the ionomer resin include acrylic acid, methacrylic acid, maleic acid, monomethyl maleate, monoethyl maleate, and maleic anhydride, and acrylic acid or methacrylic acid is particularly preferred. From the viewpoint of availability, the ionomer resin is particularly preferably a resin in which at least a part of carboxyl groups of the ethylene-acrylic acid copolymer or the ethylene-methacrylic acid copolymer is neutralized by sodium or magnesium ion.

### <Ethylene-vinyl acetate copolymer resin>

When the resin composition (A) contains an ethylene-vinyl acetate copolymer resin, the content of the ethylene-vinyl acetate copolymer resin in the resin composition (A) is preferably 50% by mass or more, more preferably 70% by mass or more, further preferably 80% by mass or more, particularly preferably 85% by mass or more, extremely preferably 90% by mass or more, and most preferably 95% by mass or more, and the content may be 100% by mass, based on the total mass of the resin composition (A). The resin composition (A) may contain one ethylene-vinyl acetate copolymer resin, or contain two or more ethylene-vinyl acetate copolymer resins different in any one or more of the content of the vinyl acetate structural unit, the type and content of other copolymerizable monomers such as the vinyl ester other than vinyl acetate and α-olefins with 3 or more carbon atoms, and the like.

In the ethylene-vinyl acetate copolymer resin, the percentage of the vinyl acetate monomer in the total of the ethylene monomer and the vinyl acetate monomer is preferably less than 50 mol%, more preferably less than 30 mol%, further preferably less than 20 mol%, and particularly preferably less than 15 mol%. When the percentage of the vinyl acetate monomer in the total of the ethylene monomer and the vinyl acetate monomer is less than the above-mentioned upper limit, for example, less than 50 mol%, mechanical strength and flexibility tend to be exhibited with good balance. The percentage of the vinyl acetate monomer in the total of the ethylene monomer and the vinyl acetate monomer may be 1 mol% or more, 3 mol% or more, or 7 mol% or more. When the resin composition (A) contains two or more different ethylene-vinyl acetate copolymer resins, at least one of the ethylene-vinyl acetate copolymer resin preferably has the above-mentioned percentage of the vinyl acetate monomer within the range between the above-mentioned lower limit and the above-mentioned upper limit.

### <Additives>

The resin composition (A) may contain an additive other than the plasticizer such as water, an ultraviolet absorber, an antioxidant, an adhesion modifier, a brightener or fluorescent brightener, a stabilizer, a dye, a pigment, a processing aid, organic or inorganic nanoparticles, calcined silica, and a surfactant. To suppress corrosion of the conductive structure formed on the resin layer (X), the resin composition (A) may contain a corrosion inhibitor. The content of the corrosion inhibitor in the resin composition (A) is preferably 0.005 to 5% by mass based on the total mass of the resin composition (A). Examples of the corrosion inhibitor include benzotriazole compounds or benzotriazole compounds having a substituent.

### <Resin layer (X)>

The resin layer (X) can be formed by a method of coating the resin composition (A) on one side of a substrate film or a metal foil. Such a method has higher productivity because of unnecessity of the step of forming a film of the resin composition (A), and is less likely to cause defects such as bubbles between the resin layer (X) and the substrate film and between the resin layer (X) and the metal foil, than the method of laminating a film consisting of the resin composition (A) on a substrate film or a metal foil. Although the method of coating one side of the substrate film or the metal foil with the resin composition (A) is not particularly limited, a method of coating of a melting resin composition (A), or a method of coating a solution or a dispersion of the resin composition (A) is preferred.

As the method of coating of a melting resin composition (A), publicly-known methods can be employed, such as a method of uniformly kneading the resin composition (A) into a melt and then extruding the melt on one side of the substrate film or the metal foil or coating the melt on one side of the substrate film or the metal foil with a knife, and a method of coating one side of the substrate film or the metal foil with the resin composition (A) by spraying, and melting the resin composition (A).

As the method of coating a solution or a dispersion of the resin composition (A), publicly-known methods can be used, such as a method of dissolving or uniformly dispersing the resin composition (A) in a solvent, coating or spray-coating the obtained solution or dispersion on one side of a substrate film or a metal foil, and, as needed, removing the solvent.

The solvent used for dissolving or dispersing the resin composition (A) is not particularly limited, and examples thereof include alcohols such as methanol, ethanol, propanol, butanol, n-butyl alcohol, t-butyl alcohol, octanol, and diacetone alcohol; ethers such as ethylene glycol monomethyl ether, ethylene glycol monoethyl ether, ethylene glycol monobutyl ether, 1,4-dioxane, and tetrahydrofuran; ketones such as acetone, methyl ethyl ketone, methyl isobutyl ketone, diisobutyl ketone, cyclohexanone, and isophorone; amides such as N, N-dimethylacetamide, N,N-dimethylformamide, and N-methyl-2-pyrrolidone; acetic esters such as methyl acetate, ethyl acetate, isopropyl acetate, and acetic acid-n-butyl; chlorides such as methylene chloride, propylene chloride, ethylene chloride, and chloroform; and dimethyl sulfoxide, acetic acid, terpineol, and butyl carbitol. Among them, when the resin composition (A) contains a polyvinyl acetal resin, lower alcohols such as ethanol, propanol, butanol, n-butyl alcohol, and t-butyl alcohol are preferred from the viewpoint of ease of solvent removal and solubility of the resin. Two or more of these may be used in combination, and solvents other than the above-mentioned solvents such as toluene, xylene, and cyclohexane may be used in combination as long as film forming properties are not impaired. Further, the above-mentioned plasticizer used for the polyvinyl acetal resin may be contained. Meanwhile, when the resin composition (A) contains an ionomer resin or an ethylene-vinyl acetate copolymer resin, toluene, xylene, benzene, trichlene, carbon tetrachloride, mineral spirit, tetrahydrofuran and the like are preferred. Although the concentration of the resin composition (A) in the solution or dispersion is not particularly limited, it is preferably 5 to 30% by mass and more preferably 8 to 20% by mass in the total mass of the solution or dispersion.

Among the above-mentioned method of coating the resin composition (A) on one side of the substrate film or the metal foil, in particular, a method of coating a melted resin composition (A) using an extruder is preferably employed. In this case, although the temperature of the resin composition (A) during extrusion is not particularly limited as long as it is a temperature at which the resin composition (A) melts, for example, when the resin composition (A) contains a polyvinyl acetal resin, the temperature of the resin composition (A) during extrusion is preferably 150 to 250°C, more preferably 170 to 230°C. When the resin temperature is too high, the polyvinyl acetal resin is decomposed and the content of volatile substances increases. Meanwhile, when the temperature is too low, the content of volatile substances also increases. To efficiently remove the volatile substance, volatile substances are preferably removed from the vent port of the extruder by reduced pressure.

### <Thickness>

The thickness of the resin layer (X) in the step (1) and the step (3) is preferably 1 µm or more, more preferably 5 µm or more, further preferably 20 µm or more, and particularly preferably 30 µm or more. When the thickness of the resin layer (X) is the above-mentioned value or more, distortions and the like of the conductive structure due to shrinkage or deformations of the resin layer (X) are less likely to occur. The thickness of the resin layer (X) is preferably 350 µm or less, more preferably 330 µm or less, more preferably 270 µm or less, further preferably 250 µm or less, particularly preferably 150 µm or less, and most preferably 100 µm or less. When the thickness of the resin layer (X) is the above-mentioned value or less, in the case where a resin layer (Y) containing a polyvinyl acetal resin and a plasticizer described later is laminated, the plasticizer transfer from the resin layer (Y) to the resin layer (X) is reduced, the decrease of the amount of plasticizer in the resin layer (Y) is suppressed, and thus the head injury criteria of a laminated glass for vehicles comprising the conductive structure-containing film tends to be small. The thickness of the resin layer (X) is measured using a thickness gage, a laser microscope or the like.

### <Substrate film>

The resin that constitutes the substrate film used in the present invention is not particularly limited, and for example, polyester resins such as polyethylene terephthalate (PET); polyimide resin; and triacetyl chloride (TAC), polyethylene (PE), polypropylene (PP), polyvinyl chloride (PVC) and the like can be used. It is preferred that the substrate film has appropriate adhesiveness to the resin layer (X), specifically, is not peeled from the resin layer (X) in a step (2), can be removed, for example, by being peeled from the resin layer (X) when used for laminated glass production and the like, and is not deformed by shrinkage and the like even during heating or contacting with various agents in the step (2). From such a viewpoint, the resin that constitutes the substrate film is preferably a polyester resin or a polyimide resin, and particularly preferably PET. The thickness of the substrate film is preferably 10 to 250 µm, more preferably 20 to 150 µm, and particularly preferably 30 to 100 µm from the viewpoint of cost and strength.

### <Metal foil>

The metal foil used in the step (3) is not particularly limited as long as it contains a conductive metal, examples thereof include copper foil and silver foil, and among these, copper foil is preferred.

### <Step (4)>

One aspect of the production method of the present invention comprises, after the step (3) of forming a resin layer (X) on one side of a metal foil, a step (4) of laminating a substrate film on the resin layer (X). The method of laminating a substrate film on the resin layer (X) is not particularly limited, and examples thereof include publicly-known methods of laminating the substrate film using a pressure roller, a heating roller, a press, a vacuum laminator or the like at a temperature not less than the temperature at which the resin layer (X) melts. Among these, the method in which a pressure roller is used, which can be easily applied to a roll-to-roll method of a highly productive method, is particularly preferred. In the method in which a pressure roller is used, the temperature of the resin layer (X) at the time of pressure bonding is preferably not less than the glass transition temperature (Tg) of the resin composition (A), more preferably Tg + 30°C or more, further preferably Tg + 50°C or more, and particularly preferably Tg + 70°C or more. The upper limit of the temperature of the resin layer (X) at the time of pressure bonding is not particularly limited. The temperature of the resin layer (X) at the time of pressure bonding is preferably 200°C or less, more preferably 180°C or less, and particularly preferably 160°C or less. When the temperature of the resin layer (X) at the time of pressure bonding is the lower limit or more, the adhesive force between the metal foil and the resin layer (X) and the adhesive force between the resin layer (X) and the substrate film tend to be sufficient, and when the temperature is the above upper limit or less, problems such as thermal decomposition and foaming of the resin layer (X) and decrease in the thickness of the resin layer (X) due to outflow of the resin composition (A) are less likely to occur. In the method in which a heating roller is used, the lower limit of the surface temperature of the heating roller is preferably higher than, more preferably 10°C or more higher than, and particularly preferably 20°C or more higher than the temperature described above as the preferred temperature of the resin layer (X) in the method in which a pressure roller is used.

The preferred aspect of the substrate film used in the step (4) is the same as the preferred aspect of the substrate film used in the step (1) described above. Due to the presence of the substrate film used in the step (4), the generation of wrinkles can be suppressed in the step (5) described below (a step of forming a conductive structure by processing the metal foil). In addition, due to the presence of the substrate film used in the step (4), contact between the conductive structure and the side without the conductive structure of the resin layer (X) can be prevented, when the conductive structure-containing film with a substrate film is rolled after the step (5) described below.

The step (3) and the step (4) may be performed simultaneously. Examples of the method of simultaneously performing the step (3) and the step (4) include a method of inserting a melt, a solution, or a dispersion of the resin composition (A) between the substrate film and the metal foil.

### <Step (5)>

One aspect of the production method of the present invention comprises, after the step (3) of forming a resin layer (X) on one side of a metal foil and a step (4) of laminating a substrate film on the resin layer (X), a step (5) of forming a conductive structure by processing the metal foil. Although the method of forming a conductive structure by processing the metal foil is not particularly limited, examples thereof include a method of forming a conductive structure by etching the metal foil. More specifically, examples thereof include a method in which a dry film resist is laminated on the metal foil of the laminated film constituted of the metal foil/resin layer (X)/substrate film obtained in the step (3) and the step (4), then an etching resistance pattern is formed using a photolithography technique, next, the laminated film provided with an etching resistance pattern is immersed in a copper etchant to form a conductive structure, and then the remaining photoresist layer is removed by a publicly-known method to form a conductive structure. Simple, easy, and efficient formation of a conductive structure having a desired shape can be achieved by the method of forming the conductive structure by etching the metal foil.

### <Step (2)>

Another aspect of the production method of the present invention comprises, after the step (1) of forming a resin layer (X) on one side of a substrate film, a step (2) of forming a conductive structure on the resin layer (X). The method of forming a conductive structure on the resin layer (X) is not particularly limited, and examples thereof include (i) a method of laminating a metal foil on the resin layer (X) and etching the metal foil by the above-mentioned method to form a conductive structure; (ii) a method of forming a metal layer on the resin layer (X) by vapor deposition or the like and etching the metal foil by the above-mentioned method to form a conductive structure; (iii) a method of printing a conductive paste on the resin layer (X) to form a conductive structure; and (iv) a method of placing a metal wire on the resin layer (X). Among these, from the viewpoint of producing a conductive structure-containing film with a substrate film suitable for production of a laminated glass excellent in front visibility, the methods (i) and (ii) are preferred, and the method (i) is more preferred from the viewpoint of production cost. The preferred aspect of the metal foil used in the method (i) is the same as the preferred aspect of the metal foil used in the step (3) described above. The method of laminating the metal foil in the method (i) is not particularly limited, and publicly-known methods of laminating the metal foil using a pressure roller, a heating roller, a press, a vacuum laminator or the like at a temperature not less than the temperature at which the resin layer (X) melts can be applied. The preferred temperature of the resin layer (X) at the time of pressure bonding in the method in which a pressure roller is used, and the preferred surface temperature of a heating roller in the method in which a heating roller is used are the same as temperatures described above as the preferred aspect in the step (4).

### <Conductive structure>

The thickness of the conductive structure formed in the step (2) and the step (5) is preferably 1 to 30 µm, more preferably 2 to 20 µm, further preferably 3 to 15 µm, and particularly preferably 3 to 12 µm from the viewpoint of reduction of reflection of light and ease of obtaining a necessary calorific value. The thickness of the conductive structure is measured using a thickness gage, a laser microscope or the like.

The conductive structure is preferably constituted of copper or silver from the viewpoints of ease of etching and availability.

The conductive structure preferably includes at least two bus bar structures. Examples of a method of forming a bus bar structure include a method of using a bus bar commonly used in the art such as a metal foil tape, a metal foil tape with conductive adhesive, and a conductive paste; and a method of forming a bus bar by leaving a part of the metal foil when the metal foil is etched to form a conductive structure. A current can be supplied to the conductive structure by connecting feeders to each of at least two bus bars and connecting each feeder to a power supply.

The conductive structure preferably includes a metal thin wire structure between the at least two bus bar structures. In this specification, the metal thin wire structure means a conductive structure having a wire width of 1 to 100 µm. The wire width of the metal thin wire structure is preferably 1 to 30 µm, more preferably 2 to 15 µm, further preferably 3 to 12 µm, and particularly preferably 3 to 9 µm. When the wire width of the conductive structure is within the above-mentioned range, a sufficient calorific value tends to be secured and desired front visibility is easily obtained.

The conductive structure-containing film with a substrate film obtainable by the production method of the present invention is also one of the present inventions.

### <Step (6), removal of substrate film>

A production method of a conductive structure-containing film without a substrate film (hereinafter simply referred to as "conductive structure-containing film"), comprising a step (6) of removing the substrate film from the conductive structure-containing film with a substrate film obtainable by the above-mentioned production method, is also one of the present inventions. The conductive structure-containing film obtainable by such a production method is also one of the present inventions. The method of removing the substrate film from the conductive structure-containing film with a substrate film obtainable by the production method of the present invention is not particularly limited, and examples thereof include a method of mechanically peeling the substrate film at the interface between the substrate film and the resin layer (X).

### <Laminated glass>

A production method of a laminated glass by use of the conductive structure-containing film with a substrate film obtained by the production method of the present invention, and a laminated glass obtainable by such a production method are also one of the present inventions. Examples of the production method of a laminated glass comprising the conductive structure-containing film with a base film include (i) a production method comprising a step (7) of interposing and laminating a conductive structure-containing film obtained by removing the substrate film from the conductive structure-containing film with a substrate film between at least two glass plates; (ii) a production method comprising a step (8) of obtaining a laminate by placing and laminating a glass plate on a side without a substrate film of the conductive structure-containing film with a substrate film and a step (9) of removing a substrate film from the laminate and further placing and laminating a glass plate on a side without a glass plate; (iii) a production method comprising a step of laminating a conductive structure-containing film with a substrate film between at least two glass plates; and (iv) a method of using organic glass such as PET as the substrate film and, through another layer as needed, further placing and laminating a glass plate on a side having a conductive structure of the conductive structure-containing film with a substrate film. Among these, the production method (i) or the production method (ii) is preferred from the viewpoint of transparency of the obtainable laminated glass.

From the viewpoint of transparency, weather resistance, and mechanical strength, the glass plate is preferably of an inorganic glass; or organic glasses such as a methacrylic resin sheet, a polycarbonate resin sheet, a polystyrene-based resin sheet, a polyester-based resin sheet such as polyethylene terephthalate, and a polycycloolefin-based resin sheet. Among these, an inorganic glass, a methacrylic resin sheet, or a polycarbonate resin sheet is preferred, and an inorganic glass is particularly preferred. The inorganic glass is not particularly limited, and examples thereof include float glass, tempered glass, semi-tempered glass, chemically tempered glass, green glass, and quartz glass.

In the production method of a laminated glass, at least one resin layer (Y) may be further interposed between at least two glasses. Specifically, at least one resin layer (Y) may be interposed between the conductive structure-containing film and the glass plate in the step (7), or at least one resin layer (Y) may be interposed between the conductive structure-containing film with a substrate film and the glass plate in the step (8), and/or between a laminate after removal of a substrate film and the glass plate in the step (9).

The resin layer (Y) preferably contains at least one thermoplastic resin selected from the group consisting of a polyvinyl acetal resin, an ethylene-vinyl acetate copolymer resin, and an ionomer resin, and more preferably contains at least one polyvinyl acetal resin. From the viewpoint of adhesiveness to the resin layer (X) and reduction of reflection, refraction and the like of light at adhesive interface with the resin layer (X), the resin layer (Y) preferably contains the thermoplastic resin identical to the thermoplastic resin contained in the resin composition (A).

When the resin layer (Y) contains at least one polyvinyl acetal resin, although the amount of the acetyl group based on the ethylene unit of the polyvinyl acetal main chain of the polyvinyl acetal resin is not particularly limited, it is preferably 0.1 to 20 mol%, more preferably 0.5 to 3 mol% or 5 to 8 mol%. Although the degree of acetalization of the polyvinyl acetal resin is not particularly limited, it is preferably 40 to 86 mol%, more preferably 45 to 84 mol%, further preferably 50 to 82 mol%, particularly preferably 60 to 82 mol%, and most preferably 68 to 82 mol%. Although the amount of the hydroxyl group based on the ethylene unit of the polyvinyl acetal main chain of the polyvinyl acetal resin is not particularly limited, it is preferably 6 to 26% by mass, more preferably 12 to 24% by mass, more preferably 15 to 22% by mass, and particularly preferably 18 to 21% by mass, and from the viewpoint of obtaining a laminated glass excellent in sound insulation performance, it is preferably 6 to 20% by mass, more preferably 8 to 18% by mass, further preferably 10 to 15% by mass, and particularly preferably 11 to 13% by mass. Herein, the amount of the acetyl group, the degree of acetalization, and the amount of the hydroxyl group have the same meanings as those described in the paragraph of <Polyvinyl acetal resin> above. When the resin layer (Y) contains two or more different polyvinyl acetal resins, at least one polyvinyl acetal resin preferably has the amount of the acetyl group, the degree of acetalization, and the amount of the hydroxyl group within the above-mentioned range.

The resin layer (Y) preferably contains a plasticizer. From the viewpoint of obtaining a laminated glass excellent in impact resistance, the content of the plasticizer in the resin layer (Y) is preferably 16.0% by mass or more, more preferably 16.1 to 36.0% by mass, further preferably 22.0 to 32.0% by mass, and particularly preferably 26.0 to 30.0% by mass, and from the viewpoint of obtaining a laminated glass excellent in sound insulation performance, it is preferably 30% by mass or more, more preferably 30 to 50% by mass, further preferably 31 to 40% by mass, and particularly preferably 32 to 35% by mass, based on the total mass of the resin layer (Y). Examples of the plasticizer include plasticizers described above in the paragraph of <Plasticizer>.

The production method of the resin layer (Y) is not particularly limited. Films produced by uniformly kneading the resin composition that constitutes the resin layer (Y), and then performing publicly-known film forming methods such as extrusion, calendering, pressing, casting, and inflation can be used. A commercially available interlayer for a laminated glass may also be used.

The method of lamination in the production method of a laminated glass in which the conductive structure-containing film with a substrate film is used is not particularly limited, and publicly-known methods can be applied. For example, in the step (7), lamination can be performed as follows: a stack obtained by stacking a conductive structure-containing film, obtained by removing the substrate film from the conductive structure-containing film with a substrate film, and any number of resin layers (Y) on a glass plate and further placing a glass plate thereon is heated as a pre-pressure bonding step to fusion-bond the conductive structure-containing film and the resin layer (Y) on the glass surface entirely or partially, and then autoclaved. Lamination may be also performed as follows: the conductive structure-containing film and any number of resin layers (Y) are bonded in advance, then interposed between at least two glass plates, and fusion-bonded together at a high temperature.

Examples of the pre-pressure bonding step include, from the viewpoints of removing excess air and lightly joining adjacent layers together, a method of degassing under reduced pressure by methods such as a vacuum bag, a vacuum ring, a vacuum laminator and the like; a method of degassing using a nip roller; and a method of compression molding at a high temperature. Examples thereof include a method of degassing under conditions of about 2 × 10⁴ Pa and 130 to 145°C by the vacuum bag method or the vacuum ring method described in EP 1235683 B1. The vacuum laminator is constituted of a heatable and vacuumable chamber, in which a laminate (a laminated glass) is formed within about 20 minutes to about 60 minutes. Usually, a reduced pressure at 1 Pa to 3 × 10⁴ Pa and a temperature of 100°C to 200°C, in particular 130°C to 160°C are effective. When the vacuum laminator is used, autoclaving is not necessary depending on the temperature and pressure. Autoclaving is performed, for example, at a pressure of about 1 × 10⁶ Pa to about 1.5 × 10⁶ Pa and a temperature of about 100°C to about 145°C for about 20 minutes to 2 hours.

An automobile windshield often has a so-called color shade region at the top of the glass. Thus, the resin layer (X) and/or the resin layer (Y) may be extruded together with a melt of a properly colored polymer, or at least one of the resin layer (X) and the resin layer (Y) may partially have a different color.

The resin layer (Y) may have a wedge-shaped thickness profile. Thereby, the laminate of the present invention can have a wedge-shaped thickness profile even when the thickness profile of the resin layer (X) is a parallel plane, and can be used for a the head-up display (HUD) in an automotive windshield.

The laminated glass of the present invention can be used as a laminated glass in a building or a vehicle. For example, it can be used for a windshield, a rear window, a roof window, a side window and the like of a train, an electric train, an automobile, a shipping, an airplane and the like.

The conductive structure-containing film with a substrate film obtained by the production method of the present invention can be also used in, in addition to a laminated glass, heating members for anti-snow accretion and anti-fogging measures such as a mirror, a curved mirror, a traffic light, a traffic sign and the like; heating members for preventing malfunction of a camera, a sensor and the like in automotive window glass; and functional members used for electromagnetic wave transmission and reception, a sensor, an electromagnetic wave shield, a touch panel, a security glass, a display and the like.

### EXAMPLES

Hereinafter, the present invention will be explained in more detail by use of the Examples, but the present invention is not limited by these Examples.

### <Thermoplastic resin composition (A)>

Polyvinyl butyral (PVB) resins shown in Table 1 were mixed at a mass ratio shown in Table 2 to obtain a thermoplastic resin composition (A). The viscosity of a toluene/ethanol = 1/1 (mass ratio) solution having a concentration of the thermoplastic resin composition (A) of 10% by mass was measured at 20°C and 30 rpm by use of a Brookfield type (B type) viscometer. The results are shown in Table 2.

**[Table 1]**

| Thermoplastic resin | Amount of hydroxyl group (% by mass) | Degree of acetalization (% by mass) | Amount of acetyl group (% by mass) | Viscosity of toluene/ethanol = 1/1 solution having concentration of 10% by mass (mPa•s) |
|---|---|---|---|---|
| Resin 1 | 19.8 | 79.2 | 1 | 152 |
| Resin 2 | 20.1 | 79 | 0.9 | 1410 |

**[Table 2]**

| Thermoplastic resin composition (A) | Resin 1 : Resin 2 (mass ratio) | Viscosity (mPa•s) |
|---|---|---|
| I | 100:0 | 152 |
| II | 0:100 | 1410 |
| III | 75:25 | 245 |
| IV | 50:50 | 444 |
| V | 25:75 | 783 |

### <Evaluation of state of conductive structure>

The state of the conductive structure in the laminated glasses obtained in Examples and Comparative Examples was visually observed with a loupe, and the presence or absence of deformations and breaks of wiring was evaluated according to the following criteria.
A No deformations or breaks were observed.
B Deformations were partially observed, but no breaks were observed.
C Breaks were slightly observed.
D Severe breaks were partially observed.
E Breaks were remarkable.

### [Production Examples 1 and 2]

### <Production of polyvinyl butyral resin film>

The thermoplastic resin composition (A)-III shown in Table 2 was film-formed at a die temperature of 220°C by use of an extruder equipped with a T die to produce a polyvinyl butyral resin film. In Production Example 1, the thickness of the film was adjusted to an average thickness of about 50 µm, and in Production Example 2, the thickness of the film was adjusted to an average thickness of about 52 µm.

### [Example 1]

### <Step (1)>

The thermoplastic resin composition (A)-III shown in Table 2 was dissolved in ethanol to prepare a solution of 12% by mass. The obtained solution was coated to a PET film having a thickness of 50 µm and unwound from a roll by use of a comma type (one type of knife coat types) small coating tester, the solvent (ethanol) was removed by hot air having a temperature of 50 to 120°C in a drying zone, then the resulting product was cut into A4 size and vacuum dried (50°C, 12 hours) to form a resin layer (X) on one side of the PET film. The thickness of the resin layer (X) was 32 µm.

### <Step (2)>

On the resin layer (X) obtained in step (1), a copper foil having a thickness of 7 µm with one side blackened was placed in an orientation in which the blackened side and the resin layer (X) were in contact with each other. They were depressurized at 140°C for 15 minutes (5 kPa) by use of a vacuum laminator, and pressurized for 3 minutes to bond them together after returning the pressure of the upper chamber to normal pressure, thereby a laminate (A) having a laminated constitution of substrate film/resin layer (X)/copper foil was obtained. A dry film resist was laminated on the copper foil of the obtained laminate (A), and then an etching resistance pattern was formed by use of a photolithography technique. Next, the laminate was immersed in a copper etchant to form a conductive structure, and then the remaining photoresist layer was removed by a conventional method to obtain a conductive structure-containing film with a substrate film (a). The conductive structure had a structure in which copper wires having a wire width of 7 µm were arranged in a form of wavy line at intervals of 500 µm and both ends of each wavy line wire were connected to two bus bar structures having a length of 11 cm and a width of 5 mm which were provided at an interval of 10 cm. No breaks of the conductive structure were observed.

### <Production of laminated glass (step (6) and step (7))>

The obtained conductive structure-containing film with a substrate film (a) was cut out at about 0.5 cm outside from the end of the conductive structure (length: 12 cm, width: 12 cm). Subsequently, the PET film was peeled and removed, and the obtained conductive structure-containing film (a') was placed on a glass plate having a length of 15 cm, a width of 15 cm, and a thickness of 3 mm. At this time, the conductive structure-containing film (a') was placed so that the side of the conductive structure-containing film (a') without the conductive structure was in contact with the glass plate and the conductive structure was near the center of the glass plate. Next, electrodes (copper foil tapes with conductive adhesive) were attached to each bus bar (a copper wire having a width of 5 mm) at both ends of the conductive structure so that each electrode end protruded out of the glass plate. Thereon, one interlayer for an automobile windshield (for a laminated glass) having a length of 15 cm, a width of 15 cm, and a thickness of 0.76 mm as a resin layer (Y) [the content of a polyvinyl butyral resin (the amount of the hydroxyl group: 20.0% by mass, the viscosity average polymerization degree of polyvinyl alcohol of a raw material: 1700): 72% by mass, and the content of triethylene glycol-bis-(2-ethylhexanoate) (hereinafter referred to as 3GO): 28% by mass] was placed, and a glass plate having a length of 15 cm, a width of 15 cm, and a thickness of 3 mm was further placed. They were put in a vacuum bag, depressurized at room temperature for 15 minutes by use of a vacuum pump, and then heated at 100°C for 60 minutes while maintaining the depressurization. After the temperature was lowered, the pressure was returned to normal pressure, and the laminated glass after pre-lamination was taken out. Then, this was put into an autoclave and treated at 140°C and 1.2 MPa for 30 minutes to produce a laminated glass. As a result of observation of the state of the conductive structure in the obtained laminated glass with a loupe, no clear deformations or breaks were observed in the conductive structure.

### [Example 2]

A laminated glass was produced in the same manner as in Example 1 except that on both sides of the conductive structure-containing film (a'), interlayers for an automobile windshield having a length of 15 cm, a width of 15 cm, and a thickness of 0.38 mm as resin layers (Y) [the content of a polyvinyl butyral resin (the amount of the hydroxyl group: 20.0% by mass, the viscosity average polymerization degree of polyvinyl alcohol of a raw material: 1700): 72% by mass, and the content of 3GO: 28% by mass] were each placed, instead of placing one interlayer for an automotive windshield having a length of 15 cm, a width of 15 cm, and a thickness of 0.76 mm as the resin layer (Y) as in <Production of laminated glass (step (7))> in Example 1. As a result of observation of the state of the conductive structure in the obtained laminated glass with a loupe, no clear deformations or breaks were observed in the conductive structure.

### [Example 3]

A conductive structure-containing film with a substrate film (b) was obtained by performing the step (1) and the step (2) in the same manner as in Example 1 except that the thickness of the resin layer (X) was 20 µm.

### <Step (8)>

The conductive structure-containing film with a substrate film (b) was cut out at about 2 cm outside from the end of the conductive structure (length: 15 cm, width: 15 cm), and electrodes (copper foil tapes with conductive adhesive) were attached to each bus bar (a copper wire having a width of 5 mm) at both ends of the conductive structure so that each electrode end protruded outside. Next, the polyvinyl butyral resin film produced in Production Example 1 was cut out in a size of 15 cm in length and 15 cm in width and placed on a glass plate having a length of 15 cm, a width of 15 cm, and a thickness of 3 mm. The above conductive structure film with a substrate film (b) to which electrodes were attached was placed thereon so that the PET film was the outermost layer. They were put in a vacuum bag, depressurized at room temperature for 15 minutes by use of a vacuum pump, then heated at 100°C for 60 minutes while maintaining the depressurization, the temperature was lowered, and then the pressure was returned to normal pressure.

### <Step (9)>

Next, the PET film was peeled and removed, one interlayer for an automobile windshield having a length of 15 cm, a width of 15 cm, and a thickness of 0.76 mm as a resin layer (Y) [the content of a polyvinyl butyral resin (the amount of the hydroxyl group: 20.0% by mass, the viscosity average polymerization degree of polyvinyl alcohol of a raw material: 1700): 72% by mass, and the content of 3GO: 28% by mass] was placed on the side on which the PET film had been bonded, and a glass plate having a length of 15 cm, a width of 15 cm, and a thickness of 3 mm was further placed. They were put in a vacuum bag and depressurized for 15 minutes at room temperature by use of a vacuum pump, and then heated at 100°C for 60 minutes while maintaining the depressurization. After the temperature was lowered, the pressure was returned to normal pressure, and the laminated glass after pre-lamination was taken out. Then, this was put into an autoclave and treated at 140°C and 1.2 MPa for 30 minutes to produce a laminated glass. As a result of observation of the state of the conductive structure in the obtained laminated glass with a loupe, no clear deformations or breaks were observed in the conductive structure.

### [Example 4]

A laminated glass was produced in the same manner as in Example 3 except that interlayers for an automobile windshield having a thickness of 0.38 mm [the content of a polyvinyl butyral resin (the amount of the hydroxyl group: 20.0% by mass, the viscosity average polymerization degree of polyvinyl alcohol of a raw material: 1700): 72% by mass, and the content of 3GO: 28% by mass] were each used, instead of the polyvinyl butyral resin film produced in Production Example 1 and used in <Step (8)> in Example 3 and the interlayer for an automobile windshield having a thickness of 0.76 mm and used in <Step (9)>. As a result of observation of the state of the conductive structure in the obtained laminated glass with a loupe, no clear deformations or breaks were observed in the conductive structure.

### [Example 5]

A conductive structure-containing film with a substrate film (c), a conductive structure-containing film, and a laminated glass were produced in the same manner as in Example 1 except that materials were passed between thermal pressure rollers set at 140°C (pressure: 0.2 MPa, rate: 0.5 m/min) for bonding instead of depressurization at 140°C for 15 minutes (5 kPa) by use of a vacuum laminator and pressurization for 3 minutes after returning the pressure of the upper chamber to normal pressure for bonding in <Step (2)> of Example 1. As a result of observation of the state of the conductive structure in the obtained laminated glass with a loupe, no clear deformations or breaks were observed in the conductive structure.

### [Example 6]

A conductive structure-containing film with a substrate film (d), a conductive structure-containing film, and a laminated glass were produced in the same manner as in Example 1 except that the thermoplastic resin composition (A)-IV was used instead of the thermoplastic resin composition (A)-III, and the concentration of the thermoplastic resin composition (A) in the ethanol solution was 10% by mass instead of 12% by mass. As a result of observation of the state of the conductive structure in the obtained laminated glass with a loupe, no clear deformations or breaks were observed in the conductive structure.

### [Example 7]

A conductive structure-containing film with a substrate film (e), a conductive structure-containing film, and a laminated glass were produced in the same manner as in Example 1 except that the thermoplastic resin composition (A)-I was used instead of the thermoplastic resin composition (A)-III, and the concentration of the thermoplastic resin composition (A) in the ethanol solution was 15% by mass instead of 12% by mass. As a result of observation of the state of the conductive structure in the obtained laminated glass with a loupe, deformations were partially observed, but no breaks were observed in the conductive structure.

### [Example 8]

A conductive structure-containing film with a substrate film (f), a conductive structure-containing film, and a laminated glass were produced in the same manner as in Example 1 except that the thermoplastic resin composition (A)-V was used instead of the thermoplastic resin composition (A)-III, and the concentration of the thermoplastic resin composition (A) in the ethanol solution was 8% by mass instead of 12% by mass. As a result of observation of the state of the conductive structure in the obtained laminated glass with a loupe, deformations were partially observed, but no breaks were observed in the conductive structure.

### [Example 9]

### <Step (3)>

The thermoplastic resin composition (A)-III shown in Table 2 was dissolved in ethanol to prepare a solution having a concentration of 12% by mass. The obtained solution was coated to a blackened side of a copper foil having a thickness of 7 µm with one side blackened by use of a comma type (one type of knife coat types) small coating tester, the solvent was removed by hot air having a temperature of 50 to 120°C in a drying zone, and then the resulting product was cut into A4 size and vacuum dried (50°C, 12 hours) to form a resin layer (X) on one side of the copper foil. The thickness of the resin layer (X) was 31 µm.

### <Step (4)>

On the side without the copper foil of the resin layer (X) obtained in step (3), a PET film having a thickness of 50 µm was placed. They were depressurized at 140°C for 15 minutes (5 kPa) by use of a vacuum laminator, and pressurized for 3 minutes to bond them together after returning the pressure of the upper chamber to normal pressure, thereby a laminate (G) having a laminated constitution of copper foil/resin layer (X)/PET film was obtained.

### <Step (5)>

A dry film resist was laminated on the copper foil of the obtained laminate (G), and then an etching resistance pattern was formed by use of a photolithography technique. Next, the laminate was immersed in a copper etchant to form a conductive structure, then the remaining photoresist layer was removed by a conventional method to obtain a conductive structure-containing film with a substrate film (g). The conductive structure had a structure in which copper wires having a wire width of 7 µm were arranged in a form of wavy line at intervals of 500 µm and both ends of each wavy line wire were connected to two bus bar structures having a length of 11 cm and a width of 5 mm which were provided at an interval of 10 cm. No breaks of the conductive structure were observed.

Next, a conductive structure-containing film and a laminated glass were produced in the same manner as in <Production of laminated glass (step (6), step (7))> of Example 1. As a result of observation of the state of the conductive structure in the obtained laminated glass with a loupe, no clear deformations or breaks were observed in the conductive structure.

### [Comparative Example 1]

The polyvinyl butyral resin film with a thickness of 52 µm obtained in Production Example 2 was interposed between a PET film having a thickness of 50 µm and the blackened side of a copper foil having a thickness of 7 µm, and laminated at 140°C by use of a vacuum laminator to obtain a polyvinyl butyral resin film (H) provided with a substrate film and a copper foil.

Next, a conductive structure-containing film with a substrate film (h), a conductive structure-containing film, and a laminated glass were produced in the same manner as in Example 5 except that the polyvinyl butyral resin film (H) was used instead of the conductive structure-containing film with a substrate film (c). As a result of observation of the state of the conductive structure in the obtained laminated glass with a loupe, breaks that looked like a peeled conductive thin wire were partially observed in the conductive structure.

### [Example 10]

### <Step (3)>

To 100 parts by mass of the thermoplastic resin composition (A)-I shown in Table 2, 0.15 parts by mass of TINUVIN326 (manufactured by BASF) as an antioxidant, 0.04 parts by mass of triethylene glycol bis (3-(3-t-butyl-4-hydroxy-5-methylphenyl)propionate) as an ultraviolet (UV) absorber, 0.03 parts by mass of magnesium acetate tetrahydrate as an adhesion modifier, and 0.02 parts by mass of potassium acetate were added and mixed. The obtained mixture was extruded and coated on the blackened side of a copper foil having a thickness of 7 µm and a width of 30 cm with one side blackened and unwound from a roll by use of an extruder (die preset temperature: 240°C) to form a resin layer (X) on one side of the copper foil. The thickness of the resin layer (X) was 35 µm.

In this Example 10, as a material that constitutes the resin layer (X), a mixture obtained by adding additives such as an antioxidant to the thermoplastic resin composition (A)-I shown in Table 2 was used. In this case, the mixture corresponds to the thermoplastic resin composition (A) in the present invention. The same applies to Examples 11 to 13 and Comparative Examples 2 to 3 described below.

### <Step (4)>

On the side without the copper foil of the resin layer (X) obtained in step (3), a PET film having a thickness of 50 µm and a width of 30 cm was placed, and they were passed between thermal pressure rollers set at 140°C (pressure: 0.2 MPa, rate: 0.5 m/min) to obtain a laminate (I) having a laminated constitution of copper foil/resin layer (X)/PET film, which was wound into a roll.

A conductive structure-containing film with a substrate film (i) was produced in the same manner as in <Step (5)> of Example 9 except that the laminate (I) unwound from the roll was used instead of the laminate (G) of A4 size, and the produced conductive structure-containing film with a substrate film (i) was wound into a roll. A conductive structure-containing film and a laminated glass were produced in the same manner as in <Production of laminated glass (step (6) and step (7))> of Example 1 except that the conductive structure-containing film with a substrate film (i) unwound from a roll was used instead of the conductive structure-containing film with a substrate film (a). As a result of observation of the state of the conductive structure in the obtained laminated glass with a loupe, deformations were partially observed, but no breaks were observed in the conductive structure.

### [Example 11]

A conductive structure-containing film with a substrate film (j), a conductive structure-containing film, and a laminated glass were produced in the same manner as in Example 10 except that the thermoplastic resin composition (A)-III was used instead of the thermoplastic resin composition (A)-I, 10 parts by mass of 3GO was further added to 100 parts by mass of the thermoplastic resin composition (A)-III, and the thickness of the resin layer (X) was 28 µm. As a result of observation of the state of the conductive structure in the obtained laminated glass with a loupe, no clear deformations or breaks were observed in the conductive structure.

### [Example 12]

### <Step (1)>

To 100 parts by mass of the thermoplastic resin composition (A)-I shown in Table 2, 0.15 parts by mass of TINUVIN326 (manufactured by BASF) as an antioxidant, 0.04 parts by mass of triethylene glycol bis (3-(3-t-butyl-4-hydroxy-5-methylphenyl)propionate) as a UV absorber, 0.03 parts by mass of magnesium acetate tetrahydrate as an adhesion modifier, and 0.02 parts by mass of potassium acetate were added and mixed, the obtained mixture was extruded and coated on a PET film having a thickness of 50 µm and a width of 30 cm by use of an extruder (die preset temperature: 240°C) to form a resin layer (X) on one side of the PET film. The thickness of the resin layer (X) was 36 µm.

### <Step (2)>

On the side without the PET film of the resin layer (X) obtained in step (1), a copper foil having a thickness of 7 µm and a width of 30 cm with one side blackened was placed so that the side without the PET film of the resin layer (X) was in contact with the blackened side. They were passed between thermal pressure rollers set at 140°C (pressure: 0.2 MPa, rate: 0.5 m/min) to obtain a laminate (K) having a laminated constitution of PET film/resin layer (X)/copper foil, which was wound into a roll.

A conductive structure-containing film with a substrate film (k), a conductive structure-containing film, and a laminated glass were produced in the same manner as in Example 10 except that the obtained laminate (K) was used. As a result of observation of the state of the conductive structure in the obtained laminated glass with a loupe, deformations were partially observed, but no breaks were observed in the conductive structure.

### [Example 13]

To 100 parts by mass of the thermoplastic resin composition (A)-I shown in Table 2, 0.15 parts by mass of TINUVIN326 (manufactured by BASF) as an antioxidant, 0.04 parts by mass of triethylene glycol bis (3-(3-t-butyl-4-hydroxy-5-methylphenyl)propionate) as a UV absorber, 0.03 parts by mass of magnesium acetate tetrahydrate as an adhesion modifier, and 0.02 parts by mass of potassium acetate were added and mixed. The obtained mixture was extruded and coated on the blackened side of a copper foil having a thickness of 7 µm and a width of 30 cm with one side blackened and unwound from a roll by use of an extruder (die preset temperature: 240°C) to form a resin layer (X). A PET film having a thickness of 50 µm and the copper foil with the resin layer (X) were passed through a pressure roller so that the PET film was in contact with the resin layer (X) and bonded together to obtain a laminate (L) having a laminated constitution of copper foil/resin layer (X)/PET film, which was wound into a roll. The thickness of the resin layer (X) was 34 µm.

A conductive structure-containing film with a substrate film (1), a conductive structure-containing film, and a laminated glass were produced in the same manner as in Example 10 except that the obtained laminate (L) was used. As a result of observation of the state of the conductive structure in the obtained laminated glass with a loupe, deformations were partially observed, but no breaks were observed in the conductive structure.

### [Comparative Example 2] (without substrate film)

A conductive structure-containing film and a laminated glass were produced in the same manner as in Example 10 except that <Step (4)> was not performed and the thickness of the resin layer (X) was 31 µm. As a result of observation of the state of the conductive structure in the obtained laminated glass with a loupe, breaks were partially observed in the conductive structure. Presumably, it was because of wrinkles generated during thermocompression bonding of the copper foil.

### [Comparative Example 3] (without substrate film; with plasticizer)

A conductive structure-containing film and a laminated glass were produced in the same manner as in Example 11 except that <Step (4)> was not performed and the thickness of the resin layer (X) was 31 µm. As a result of observation of the state of the conductive structure in the obtained laminated glass with a loupe, remarkable breaks were observed in the conductive structure. Mainly it was because a part of the conductive structure attached to the adjacent resin layer (X) was peeled off when the conductive structure-containing film was unwound from a roll.

The summary of Examples 1 to 13 and Comparative Examples 1 to 3 is shown in Table 3.

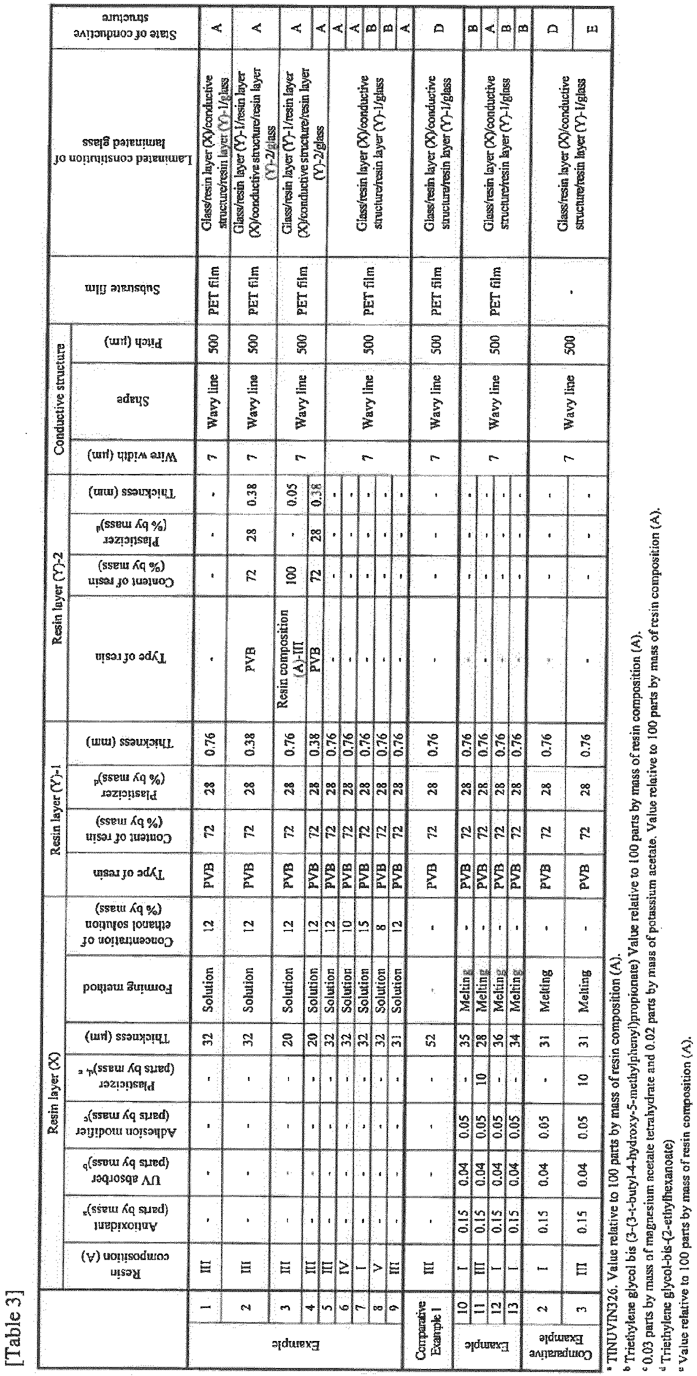

## Claims

1. A production method of a conductive structure-containing film with a substrate film, the production method comprising:
a step (1) of forming a resin layer (X) by coating a thermoplastic resin composition (A) containing at least one thermoplastic resin selected from the group consisting of a polyvinyl acetal resin, an ionomer resin, and an ethylene-vinyl acetate copolymer resin on one side of the substrate film; and
a step (2) of forming a conductive structure on the resin layer (X).

2. A production method of a conductive structure-containing film with a substrate film, the production method comprising:
a step (3) of forming a resin layer (X) by coating a thermoplastic resin composition (A) containing at least one thermoplastic resin selected from the group consisting of a polyvinyl acetal resin, an ionomer resin, and an ethylene-vinyl acetate copolymer resin on one side of a metal foil;
a step (4) of laminating a substrate film on the resin layer (X); and
a step (5) of forming a conductive structure by processing the metal foil.

3. The production method of a conductive structure-containing film with a substrate film according to claim 1 or 2, wherein, in the step (1) or the step (3), a method of coating the thermoplastic resin composition (A) is a method of coating of a melting thermoplastic resin composition (A).

4. The production method of a conductive structure-containing film with a substrate film according to claim 1 or 2, wherein, in the step (1) or the step (3), a method of coating the thermoplastic resin composition (A) is a method of coating a solution or a dispersion of the thermoplastic resin composition (A).

5. The production method of a conductive structure-containing film with a substrate film according to any of claims 1 to 4, wherein the thermoplastic resin composition (A) contains 50% by mass or more of a polyvinyl acetal resin based on a total mass of the thermoplastic resin composition (A).

6. The production method of a conductive structure-containing film with a substrate film according to claim 5, wherein a viscosity of a toluene/ethanol = 1/1 (mass ratio) solution having a concentration of the polyvinyl acetal resin of 10% by mass measured at 20°C and 30 rpm by use of a Brookfield type (B type) viscometer is more than 200 mPa•s.

7. The production method of a conductive structure-containing film with a substrate film according to claim 5 or 6, wherein the thermoplastic resin composition (A) contains 0 to 20% by mass of a plasticizer based on the total mass of the thermoplastic resin composition (A).

8. The production method of a conductive structure-containing film with a substrate film according to any of claims 1 to 7, wherein the thermoplastic resin composition (A) contains 80% by mass or more of the polyvinyl acetal resin based on the total mass of the thermoplastic resin composition (A).

9. The production method of a conductive structure-containing film with a substrate film according to any of claims I to 8, wherein the conductive structure includes at least two bus bar structures.

10. The production method of a conductive structure-containing film with a substrate film according to claim 9, wherein the conductive structure includes a metal thin wire structure between the at least two bus bar structures.

11. The production method of a conductive structure-containing film with a substrate film according to any of claims 1 to 10, wherein, in the step (2) or the step (5), the conductive structure is formed by etching the metal foil.

12. A conductive structure-containing film with a substrate film obtainable by the production method according to any of claims 1 to 11.

13. A production method of a conductive structure-containing film, the production method comprising:
a step (6) of removing a substrate film from a conductive structure-containing film with a substrate film obtainable by the production method according to any of claims 1 to 11.

14. A conductive structure-containing film obtainable by the production method according to claim 13.

15. A production method of a laminated glass, the production method comprising: a step (7) of interposing and laminating a conductive structure-containing film obtainable by the production method according to claim 13 between at least two glass plates.

16. A production method of a laminated glass, the production method comprising:
a step (8) of obtaining a laminate by placing and laminating a glass plate on a side without a substrate film of a conductive structure-containing film with a substrate film obtainable by the production method according to any of claims 1 to 11; and
a step (9) of removing the substrate film from the laminate and further placing and laminating a glass plate on a side without a glass plate.

17. The production method of a laminated glass according to claim 15, wherein, in the step (7), at least one resin layer (Y) is interposed between the conductive structure-containing film and the glass plate.

18. The production method of a laminated glass according to claim 16, wherein at least one resin layer (Y) is interposed between the conductive structure-containing film with a substrate film and the glass plate in the step (8), and/or between a laminate after removal of the substrate film and the glass plate in the step (9).

19. The production method of a laminated glass according to claim 17 or 18, wherein the resin layer (Y) contains a thermoplastic resin identical to a thermoplastic resin contained in the thermoplastic resin composition (A).

20. A laminated glass obtainable by the production method according to any of claims 15 to 19.

21. A heating member comprising the conductive structure-containing film according to claim 14.
